# EUROPÄISCHE PATENTANMELDUNG

(11) **EP 0 837 211 A2**
(43) Veröffentlichungstag der Anmeldung: **22.04.1998**
(21) Anmeldenummer: 97890205.4
(22) Anmeldetag: 15.10.1997
(51) Int. Cl.: E05F 15/10, E05F 15/14

(54) **Schiebe- bzw. Schwenkschiebetüre für Fahrzeuge**

(30) Priorität: 18.10.1996 AT 1830/96
(71) Anmelder: IFE Industrie-Einrichtungen Fertigungs-Aktiengesellschaft, A-3340 Waidhofen a.d. Ybbs (AT)
(72) Erfinder: Fink, Martin, Ing., 3340 Waidhofen a.d. Ybbs (AT)
(74) Vertreter: Patentanwälte BARGER, PISO & PARTNER

(57) **Zusammenfassung**

Die Erfindung betrifft eine Türe, bei der ein umlaufendes Antriebsmittel (9) um zwei oberhalb der Türe angeordnete Umlenkrollen (7, 8) umläuft und bei der jeder Türflügel (1, 2) mit diesem Antriebsmittel (9) verbunden ist, wobei der eigentliche Antriebsblock (21) im wesentlichen aus einem Elektromotor (12), einem Getriebe (13) und einem Zahn- oder Reibrad (11) besteht, das auf ein Zahn- oder Reibrad (10), das mit einer der beiden Umlenkrollen (7, 8) verbunden ist, zusammenwirkt.

Die Erfindung ist dadurch gekennzeichnet, daß der Antriebsblock um eine Achse (19) verdrehbar oder entlang einer Führung verschiebbar gelagert ist, wobei er zwischen einer Position, die dem Normalbetrieb entspricht, in der die beiden Räder (10, 11) zusammenwirken und einer Position, die dem Notöffnen entspricht, in der die beiden Räder (10, 11) nicht zusammenwirken, hin- und her- bewegbar ist.

Die Unteransprüche betreffen Mittel, um diese Bewegung zu bewirken.

## Beschreibung

Die Erfindung betrifft eine Schiebe- bzw. Schwenkschiebetüre für Fahrzeuge, bei der umlaufendes, endloses Antriebsmittel wie eine Kette, ein Seil, ein Riemen od.dgl. um zwei oberhalb der Türe angeordnete Umlenkrollen umläuft und bei der der bzw. jeder Türflügel mittels eines Mitnehmers mit einem der beiden Trume dieses endlosen Antriebselementes verbunden ist. Die Führung der Türflügel kann auf verschiedene bekannte Weise erfolgen und bedarf als nicht zur Erfindung gehörend, in dieser Anmeldung keiner näheren Erläuterung.

Der Antrieb, durch den das umlaufende Antriebsmittel in Bewegung versetzt wird, besteht im wesentlichen aus einem Elektromotor, gegebenenfalls einem daran angeflanschten Getriebe, insbesondere Winkelgetriebe, und einem Zahn- oder Reibrad, das auf ein passend dimensioniertes Zahn- oder Reibrad, das koaxial mit einer der beiden Umlenkrollen für das umlaufende Antriebsmittel angeordnet ist, zusammenwirkt.

Derartige Antriebe sind wegen ihres einfachen und kompakten Aufbaus sehr beliebt. Wenn es sich bei der Türe um eine reine Schiebetüre handelt, ist die Verbindung zwischen dem umlaufenden Antriebsmittel und den einzelnen Türflügeln äußerst einfach, doch auch bei Schwenkschiebetüren ist es bei Verwendung von entsprechend ausgebildeten Mitnehmern am Türflügel möglich, die Ausschwenkbewegung der Schwenkschiebetüre ohne weitere Gelenke oder bewegliche Mechanismen auf das umlaufende Antriebsmittel zu übertragen. Dabei ist es vorteilhaft, wenn in der Stellung, in der sich der Mitnehmer nahe einer Umlenkrolle befindet, der Mitnehmer eine Lage einnimmt, in der das umlaufende Antriebsmittel weder tordiert, noch aus seiner geraden Lage verschoben wird. In der jeweiligen anderen Endlage des Türflügels, in der sich der Mitnehmer nahe der Mitte zwischen den beiden Umlenkrollen befindet, ist eine solche Torsion oder Verschiebung des umlaufenden Antriebsmittels ohne Probleme durchzuführen.

Ein Nachteil derartiger Türantriebe besteht darin, daß bei Ausfall des Antriebes, beispielsweise bei Stromausfall, bei Getriebebruch, bei einer Motorblockade od.dgl. ein Öffnen der Türe von Hand aus nicht möglich ist, da durch die Art der Kraftübertragung der Antriebstrang insgesamt selbsthemmend ausgebildet ist. Dies ist andererseits für die Sicherheit im normalen Betrieb durchaus erwünscht, da somit auch dann, wenn es nicht zum vollständigen Schließen der Türe kommt und der Türflügel vor Erreichen seiner Schließ-Endlage, beispielsweise durch Aufprall auf ein Hindernis, stehen bleibt, ein Öffnen der Türe durch Passagiere oder durch die Trägheitskräfte während der Fahrt des Fahrzeuges nicht möglich ist.

Die Erfindung bezweckt bei einer Türe der geschilderten Art, den Türantrieb so auszugestalten, daß ein Öffnen der Türe im Notbetrieb möglich wird.

Erfindungsgemäß ist dabei vorgesehen, daß der Antriebsblock um eine Achse verdrehbar oder entlang einer Führung verschiebbar gelagert ist, wobei er zwischen einer Position, die dem Normalbetrieb entspricht, in der die beiden Räder zusammenwirken und einer Position, die dem Notöffnen entspricht, in der die beiden Räder nicht zusammenwirken hin- und her- bewegbar ist.

Das Verschwenken erfolgt vorteilhafterweise durch direktes Anbringen eines Handgriffes an einer die Führung tragenden Führungsplatte, wobei sich der Handgriff im oberen Randbereich der Türe in unmittelbarer Nähe des Antriebs befindet und somit im Bedarfsfall für jedermann leicht ersichtlich und zugänglich ist.

Da üblicherweise das umlaufende Antriebsmittel mit seinen Umlenkrollen schon aus Montage- und Justiergründen einen eigenen Bauteil darstellt und der Motor samt Getriebe und Antriebsrad einen weiteren Bauteil darstellt, der mit dem Treibrad der Umlenkrolle durch federnde Aufhängung od.dgl. kostengünstig in Wirkverbindung gebracht wird, um aufwendiges Justieren, wie es bei einer starren Verbindung notwendig ist, zu vermeiden, ist es ein Leichtes, diese federnde Aufhängung der eigentlichen Antriebseinheit so auszugestalten, daß das Ausrücken der Verbindung zwischen den beiden Rädern durch Verschwenken oder Verschieben der Antriebseinheit gegen die Kraft ihrer Andrückfeder erfolgt.

Die Erfindung ist im folgenden an Hand eines bevorzugten Ausführungsbeispieles näher erläutert. Dabei zeigt
die Fig. 1 den oberen Türbereich, einen mit einem erfindungsgemäßen Türantrieb ausgestatteten zweiflügeligen Schiebe- oder Schwenkschiebetür in der normalen Betriebslage,
die Fig. 2 die Tür gemäß Fig. 1 in der Notbetätigungslage,
die Fig. 3 ein Detail der Fig. 1 und
die Fig. 4 das Detail der Fig. 3 aber in der Lage entsprechend der Fig. 2.

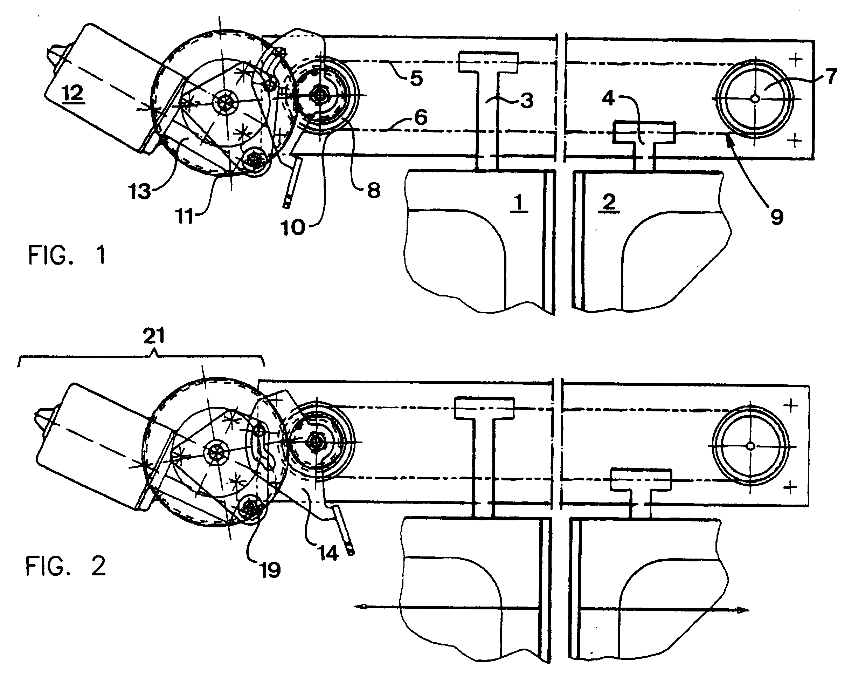

In Fig. 1 ist eine Türe mit zwei Türfügeln 1, 2 dargestellt, die mit Mitnehmern 3, 4 ausgestattet sind, die wiederum unverschieblich auf jeweils einen Trum 5 bzw. 6 eines um zwei Umlenkrollen 7, 8 umlaufenden, flexiblen Antriebsmittels 9 bestehen.

Das Antriebsmittel 9 kann je nach Verwendungszweck aus einem Seil, einer Kette oder einem Riemen bestehen, wobei als Materialien für dieses Element wiederum Stahl oder Kunststoff in Frage kommen. Die Verbindung zwischen den Mitnehmern und dem jeweiligen Trum des umlaufenden Antriebsmittels 9 kann auf vielerlei Weisen erfolgen. So ist es möglich, diese Mitnehmer mit dem umlaufenden Antriebsmittel zu verschrauben, zu verkleben oder zu verschweißen, auch die Anbringung von eigenen Anschlägen zu beiden Seiten der Mitnehmer am Antriebsmittel ist möglich und unter Umständen zweckmäßig, besonders, wenn es dadurch möglich wird, daß die Mitnehmer bezüglich des Antriebsmittels Schwenkbewegungen um die Achse des Antriebsmitteles 9 ausführen können, ohne dieses zu tordieren.

Das Antriebsmittel 9 wird durch eine der beiden Umlenkrollen, im gezeichneten Beispiel ist es die linke Umlenkrolle 8, in Bewegung versetzt. Zu diesem Zweck ist entweder die Umlenkrolle selbst als Zahnrad ausgebildet bzw. trägt ein Zahnrad oder einen Zahnkranz, oder es ist ein Zahnrad 10 mit der Welle der Umlenkrolle 8 verbunden. Dieses Zahnrad 10 wird seinerseits wiederum durch ein Antriebszahnrad 11 in Drehung versetzt, das bereits zum eigentlichen Antriebsblock 21, bestehend aus einem Motor 12, einem daran angeflanschten (Winkel-) Getriebe 13, gegebenenfalls einer Montageplatte 18 und eben dem Antriebszahnrad 11, gehört.

Dieser Antriebsblock 21 ist am Wagenkasten um einen Bolzen 19 verschwenkbar oder auch in einer Führung verschieblich gelagert und wird durch die Kraft einer nicht dargestellten Feder oder sein Eigengewicht so belastet, daß es zum Eingriff zwischen den beiden Antriebsrädern 10 und 11 kommt.

Im gezeigten Beispiel sind diese Räder Zahnräder, doch ist es auch möglich, Reibräder vorzusehen, in Abhängigkeit von den zu übertragenden Momenten und den auftretenden Beschleunigungen und den zur Verfügung stehenden Anpreßkräften zwischen den Reibrädern.

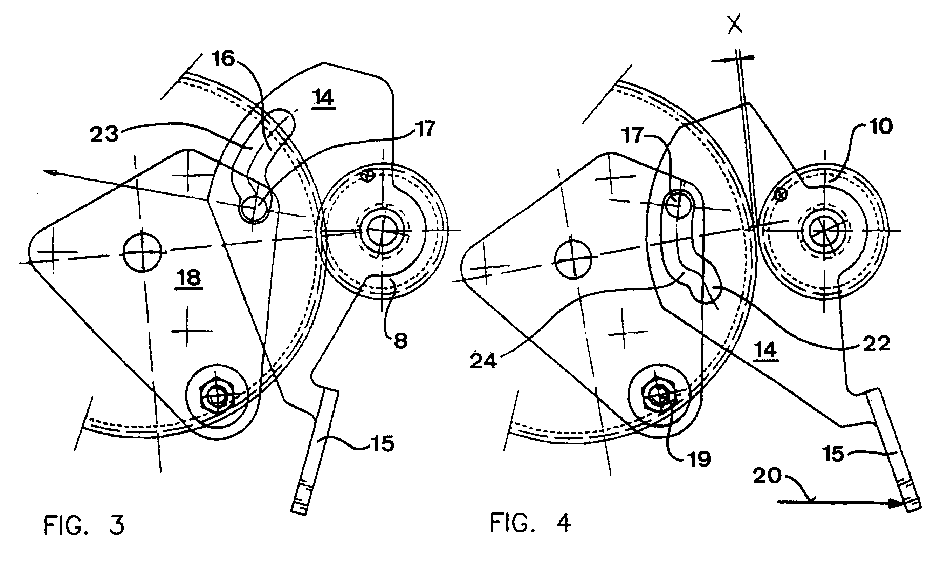

Erfindungsgemäß wird nun die für ein händisches Öffnen der Türe notwendige Entkopplung der Antriebsteile durch eine Kulissenführung 14 bewirkt (Fig. 3, 4), die um die Achse der angetriebenen Umlenkrolle 8, die zugleich die Achse des angetriebenen Zahnrades 10 ist, mittels eines Handhebels 15 verschwenkbar ist. Es ist selbverständlich möglich, eine andere Drehachse zu wählen, doch bedeutet dies einen zusätzlichen Aufwand.

Die Kulissenplatte 14 weist eine schlitzartige Kulisse 16 auf, in der ein Zapfen bzw. eine Rolle 17 eingreift, die auf einer Montageplatte 18 des Antriebsblockes 21 vorgesehen ist. Wenn der Hebel 15 in Richtung des Pfeiles 20 (Fig. 4) verschwenkt wird, bewegt sich die Kulisse 16 relativ zum Zapfen 17 und bewirkt aufgrund ihrer Form ein Verschwenken des Antriebsblockes 21 um dessen Drehpunkt 19, wodurch die Antriebsräder 10, 11, wie in Fig. 4 durch den Abstand "x" dargestellt, außer Eingriff gelangen. In dieser Stellung des Hebels 15 kann somit die Türe durch händisches Bewegen des Türflügels 1 und/oder 2 leicht in beiden Richtungen bewegt werden, ohne daß es zu einer Drehung des Antriebsrades 11, des Getriebes 13 oder des Motors 12 kommt.

Im dargestellten Ausführungsbeispiel ist die Kulisse so ausgeführt, daß sie von sich aus sowohl in der in Fig. 3 gezeigten normalen Betriebsposition, als auch in der in Fig. 4 gezeigten Notbetätigungsposition verbleibt, sozusagen ein mechanisches Äquivalent eines bistabilen Flip-Flop darstellt.

Im gezeigten Beispiel wird dies durch die Form und Anordnung der Kulisse 16 erreicht, deren Endabschnitte 22, 23 im wesentlichen normal zur Verbindungsgerade zwischen Vorsprung (17) und Drehachse der Kulissenplatte, somit in jeweils konstantem Abstand zur Drehachse der Kulissenplatte, verlaufen. Die beiden Endabschnitte 22, 23 sind dabei durch einen schräg verlaufenden Mittelabschnitt 24 miteinander verbunden.

Es ist selbstverständlich möglich, die Kulisse so auszugestalten, daß beim Loslassen des Hebels 15 dieser unter der Wirkung der auf den Antriebsblock 21 wirkenden Kraft (Feder und/oder Eigengewicht, oder auch unter der Wirkung einer eigens dafür vorgesehenen, auf die Kulissenplatte 14 wirkenden Feder), diese von sich aus, in die normale Betriebsposition (Fig. 3) zurückkehrt und so die Türbewegung wiederum fixiert.

Dem Vorteil, daß dies die Rückkehr des Türbetriebes zum Normalbetrieb automatisch mit sich bringt, steht der Nachteil gegenüber, daß im Notfall die ungeübten und die Vorrichtung nicht kennenden Passagiere erst erkennen müssen, daß eine Notbetätigung der Türe nur bei festgehaltenem Hebel 15 möglich ist, was unter Umständen, besonders wenn nur ein Passagier anwesend ist, auch physisch Probleme mit sich bringt.

Die Erfindung ist nicht auf das dargestellte Ausführungsbeispiel beschränkt, sondern kann verschiedentlich abgewandelt werden. So ist es möglich, andere Größenverhältnisse der Zahnräder 10, 11 zu wählen, was im wesentlichen vom verwendeten Motor und Getriebe abhängt und es ist möglich, den Drehpunkt des Antriebsblockes 21 (oder der Kulissenplatte 14) an eine andere Stelle zu verlegen oder statt einer Dreh- bzw. Schwenkbewegung eine laterale Bewegung vorzusehen.

Bei Verwendung von Reibrädern für die Antriebsräder 10, 11 kann es notwendig sein, im Normalbetrieb eine entsprechende Anpreßkraft zwischen den Rädern vorzusehen, was durch eine passende federbelastete Ausgestaltung der Kulissenplatte 14 oder dadurch zu berücksichtigen wäre, daß in der in Fig. 3 dargestellten Position der Vorsprung 17 nicht an der Kulisse 16 anliegt, so daß im Normalbetrieb die Kulisse 16 keinen Einfluß auf die Kinematik und Dynamik des Antriebes hat. Dies kann bei der dargestellten Variante mit Zahnrädern aber sehr wohl vorteilhaft sein, da dann die Justierung der Kulisse und die Justierung der Stellung der Zahnräder zueinander gemeinsam erfolgen kann.

Die Bezeichnung "Führung" enerseits und "Kulisse" anderseits folgt dem deutschen Sprachgebrauch, wobei Führung ein allgemeinerer Begriff als Kulisse ist. Eine Kulisse ermöglicht immer nur eine Bewegung entlang eines vorgegebenen (bei Schaltkulissen auch verzweigten) Weges, eine Querbewegung (über das notwendige Spiel hinaus) führt zur Beschädigung. Eine Führung erfaßt diesen Fall, aber auch Fälle, in denen beispielsweise eine Rolle durch eine Feder an eine Führung gedrückt wird, bei entsprechender Gegenkraft aber ohne Beschädigung abheben kann, beispielsweise die Ventilsteuerung eines Verbrennungskraftmotors.

## Patentansprüche

1. Schiebe- bzw. Schwenkschiebetüre für Fahrzeuge, bei der umlaufendes, endloses Antriebsmittel (9) wie eine Kette, ein Seil, ein Riemen od.dgl. um zwei oberhalb der Türe angeordnete Umlenkrollen (7, 8) umläuft und bei der der bzw. jeder Türflügel (1, 2) mittels eines Mitnehmers (3, 4) mit einem der beiden Trume (5, 6) dieses endlosen Antriebsmittels (9) verbunden ist, wobei der eigentliche Antriebsblock (21), durch den das umlaufende Antriebsmittel in Bewegung versetzt wird, im wesentlichen aus einem Elektromotor (12), gegebenenfalls einem daran angeflanschten Getriebe, insbesondere Winkelgetriebe (13), und einem Zahn- oder Reibrad (11) besteht, das auf ein passend dimensioniertes Zahn- oder Reibreibrad (10), das mit einer der beiden Umlenkrollen (7, 8) für das umlaufende Antriebsmittel (9) verbunden ist, zusammenwirkt, dadurch gekennzeichnet, daß
der Antriebsblock um eine Achse (19) verdrehbar oder entlang einer Führung verschiebbar gelagert ist, wobei er zwischen einer Position, die dem Normalbetrieb entspricht, in der die beiden Räder (10, 11) zusammenwirken und einer Position, die dem Notöffnen entspricht, in der die beiden Räder (10, 11) nicht zusammenwirken hin- und her- bewegbar ist.

2. Türe nach Anspruch 1, dadurch gekennzeichnet, daß, bevorzugt koaxial zur Achse des Rades (10), eine Führungsplatte (14) schwenkbar, bevorzugt durch eine Handhabe (15) schwenkbar, angeordnet ist, deren Führung (16) mit einem Vorsprung (17) des Antriebsblockes (21) zusammenwirkt und je nach Winkellage der Führungsplatte (14) den Antriebsblock (21) in eine der beiden Positionen bewegt.

3. Türe nach einem der Ansprüche 1 oder 2, dadurch gekennzeichnet, daß der Antriebsblock durch eine Feder in eine der beiden Positionen gedrängt wird.

4. Türe nach einem der Ansprüche 2 oder 3, dadurch gekennzeichnet, daß die Führung/der Vorsprung (16, 17) in jeder der beiden Positionen stabil positioniert sind, beispielsweise durch einen Totpunktmechanismus.

5. Türe nach einem der Ansprüche 2 oder 3, dadurch gekennzeichnet, daß die Führung (16) eine Kulissenführung ist, die den Vorsprung (17) in Querrichtung im wesentlichen spielfrei führt und daß zumindest ein Endabschnitt (23, 24) der Kulisse (16) im wesentlichen konstanten Abstand von der Drehachse der Führungsplatte (14) aufweist.

6. Türe nach Anspruch 5, dadurch gekennzeichnet, daß beide Endabschnitte (23, 24) im wesentlichen konstanten, aber voneinander unterschiedlichen Abstand von der Drehachse der Führungsplatte (14) aufweisen und durch einen schrägen Mittelabschnitt (24) miteinander verbunden sind.
